# EUROPÄISCHE PATENTSCHRIFT

(11) **EP 1 253 346 B1**
(45) Veröffentlichungstag und Bekanntmachung des Hinweises auf die Patenterteilung: **14.06.2006**
(21) Anmeldenummer: 01109972.8
(22) Anmeldetag: 24.04.2001
(51) Int. Cl.: F16F 15/00, F16F 15/08

(54) **Vorrichtung zur schwingungsisolierenden Aufnahme von Lasten**
Device for a vibration isolating support for loads
Dispositif de support de charges isolant des vibrations

(43) Veröffentlichungstag der Anmeldung: 30.10.2002
(73) Patentinhaber: Heiland, Peter, 65479 Raunheim (DE)
(72) Erfinder: Heiland, Peter, 65479 Raunheim (DE)
(74) Vertreter: Herden, Andreas F.

(56) Entgegenhaltungen:
- EP-A- 0 621 418
- WO-A-99/24312
- US-A- 5 423 523
- US-A- 5 730 429
- US-A- 5 734 246
- US-A- 6 062 551
- PATENT ABSTRACTS OF JAPAN vol. 1998, no. 03, 27. Februar 1998 (1998-02-27) & JP 09 291969 A (TOYO TIRE &RUBBER CO LTD), 11. November 1997 (1997-11-11)
- DATABASE WPI Section PQ, Week 199748 Derwent Publications Ltd., London, GB; Class P81, AN 1997-522698 XP002178721 & JP 09 250591 A (CANON KK), 22. September 1997 (1997-09-22)

## Beschreibung

Die Erfindung betrifft eine Vorrichtung zur Schwingungsisolation von Lasten nach dem Oberbegriff des Anspruchs 1.

Bei einer Vielzahl von technischen Anwendungen sind unerwünschte Schwingungen und Stöße abzufedern . Solche störenden Schwingungen wirken sich insbesondere bei hoch empfindlichen technischen Geräten negativ aus, die zudem noch sehr schwer sein können. Als Beispiel sei ein mehrere Tonnen schwerer Computertomograph genannt. Die Übertragung von Schwingungen auf solche Maschinen versucht man durch eine sogenannte Schwingungsisolierung zu verhindern. In der Praxis wird vielfach eine reine passive Isolierung mittels Federn eingesetzt. Wegen der begrenzten Wirksamkeit derartiger Systeme geht man daher verstärkt dazu über, sogenannte aktive Systeme unter Einschluss von Aktoren einzusetzen. In der Praxis tragen diese Aktoren die gesamte Last. Dies bedeutet aber die beschränkte Einsetzbarkeit von sogenannten piezoelektrischen Translatoren oder keramischen Festkörperaktoren, die elektrische Energie direkt in mechanische Energie und umgekehrt umwandeln können. Piezo-Aktoren sind für große statische Lasten industriell so gut wie nicht verfügbar und weisen zum anderen nur eine geringe Hubbewegung und statische Belastbarkeit auf.

Es ist bereits bekannt (Patent Abstracts of Japan, Bd. 1998, Nr. 03, 27. Februar 1998, und JP 09 291269 A), das Gewicht einer montierten Maschine und der Maschinenauflage gemeinsam von einer Anzahl von Stützen und einer Luftfeder tragen zu lassen. Dabei ist jede Stütze aus einem Piezoaktuator und einem Scherkraft absorbierenden Element aufgebaut, welches drei oder mehr Schichten von laminiertem, dünnem, elastischem Gummi und steifen Platten dazwischen aufweist. Ein erheblicher Teil der Last geht also über die Piezoaktuatoren.

Um die Aktoren von statischen Lasten zu entlasten, ist es bereits bekannt (US-A-6 062 551), zur Abstützung der Last eine Luftfeder mit einer Plattform vorzusehen, die von einem Hydraulikkolben mit gestützt wird, so dass sich die Bewegungen der Luftfeder auf die Arbeitsflüssigkeit und damit auf eine Reihe von Kolben übertragen, die mit piezoelektrischen Aktuatoren in Antriebsverbindung stehen. Die Aktuatoren können somit sowohl einen Teil der Last aufnehmen als auch die Last antreiben. Diese Art der Schwingungsisolation ist jedoch sehr aufwendig.

Mit der US-A-5 730 429, welche als nachstliegender Stand der technick angesehen wird, ist ein System bekannt geworden, welches einen frequenzabhängigen Entkoppler umfasst, der als Feder in Serie zu einem Aktuator angeordnet ist, um aktive Kräfte zur Auslöschung von Vibrationen zu liefern. Parallel zu dem Entkoppler sind Elastomerfedern vorgesehen zur Abstützung der primären Last. Es werden diverse Ausbildungen des Entkopplers beschrieben, darunter einen aus Blechen und Elastomerschichten aufgebauten Entkoppler. Angaben über Steifigkeitsverhältnisse zwischen den Elastomerfedern zur Primärabstützung und dem Entkoppler in Serie mit dem Aktuator finden sich in der Schrift nicht.

Der Erfindung liegt die Aufgabe zugrunde, eine Vorrichtung zur Schwingungsisolation unter Einbezug von Aktoren zu schaffen, die mit einem einfachen Ausbau auskommen und auch schwere Lasten zu bewältigen ermöglichen.

Die Erfindung wird in Anspruch 1 definiert. Weiterbildungen der Erfindung sind in den abhängigen Ansprüchen enthalten.

Die erfindungsgemäße Vorrichtung umfasst wenigstens eine zwischen einer Last und einer Standfläche angeordnete erste Schwingungsisolationseinrichtung, die zur zumindest teilweisen Entkopplung der zwischen der Last und der Standfläche wirkenden statischen und dynamischen Kräfte dient und wenigstens eine zweite Schwingungsisolationseinrichtung zur Aufnahme der im wesentlichen entkoppelten dynamischen Kräfte beinhaltet. Die auf die Vorrichtung einwirkenden bzw. die von der Vorrichtung ausgehenden dynamischen Kräfte werden im wesentlichen von den statischen Kräften entkoppelt und aktiv schwingungsisoliert.

In diesem Zusammenhang umfasst die erfindungsgemäße Vorrichtung wenigstens ein erstes dynamisches Kopplungselement, das für eine passive Schwingungsisolierung sorgt und sowohl in der Vertikalen als auch in der Horizontalen schwingungsfähig sein kann..

Ein solches Kopplungselement kann durch eine Gummifeder realisierbar sein. Es können mehrere zusammengeschaltete Gummifedern verwendete werden.

Durch die Merkmale der erfindung werden die erste und zweite Schwingungsisolationseinrichtungen in Bezug aufeinander und mit Bezug auf die Last so abgestimmt, dass die Kopplungselemente wechselweise eine dynamische Kopplung zwischen den Schwingungsisolationseinrichtungen und der Last bewirken.

Die erste Schwingungsisolationseinrichtung ist als eine passive Schwingungsisolierung eingerichtet und trägt im wesentlichen die vollständige statische Last. Die passive schwingungsisolationseinrichtung bestimmt im wesentlichen die Schwingungsdynamik der Gesamtvorrichtung. Dabei sind Federsteifigkeit und Dämpfung als Parameter bedeutsam. Ferner sind natürlich auch das auf der Passivisolierung gelagerte Gewicht und unter Umständen auch die Auflagefläche des Kopplungselements auf der Auflage zu beachten.

Wegen der Empfindlichkeit von Piezoaktoren gegenüber Zugspannungen wird die zweite Schwingungsisolationseinrichtung mit ihrem Kopplungselement derart eingestellt, dass Spannungen, die zwischen der zweiten Schwingungsisolationseinrichtung und der Last auftreten können, reduziert oder gar eliminiert werden.

Als Kopplungselement können Gummifedern, aber auch Metallfedern, Luftkissen und/oder magnetische Schwebevorrichtungen verwendet werden.

Die dynamische Kopplung wird über die physikalischtechnischen Parameter der Kopplungselemente eingestellt Mit der Einstellung der Kopplung wird die dynamische Kraftübertragung auf die zweite Schwingungsisolationseinrichtung eingestellt. Auf diese Weise wird auch die von der zweiten Schwingungsisolationseinrichtung auf die Last übertragbare Kraft eingestellt. Damit kann auf die Schwingungsamplitude der Last Einfluss genommen werden, und zwar durch die dynamische Kraftübertragung , so dass diese erzeugte dynamische Schwingung einstellbar wird.

Die Schwingungsisolationseinrichtung mit ihrem technischen und physikalischen Parameter der einzusetzenden Aktoren zur aktiven Schwingungsisolierung wird gezielt der Gebäude- oder Bodenvibration angepasst.

Die Eigenfrequqenzen der Schwingungsisolationseinrichtungen hängen vor allem mit der Steifheit des Gummis im jeweiligen Kopplungselement zusammen, weswegen das Verhältnis aus der Gummisteifheit der einzelnen Federn ein sehr gutes Maß für die Kraftübertragung ist.

Bei der Erfindung wird ausgenutzt, dass die dynamische Kraftübertragung einem Kennlinienfeld mit mehreren Kennlinien folgt, die den funktionalen Zusammenhang zwischen der Eigenfrequenz des Kopplungselements der ersten Schwingungsisolationseinrichtung und dem Verhältnis aus der Eigenfrequenz des Kopplungselements der ersten Schwingungsisolationseinrichtung und der Eigenfrequenz des Kopplungselements der zweiten Schwingungsisolationseinrichtung wiedergeben. Mit Kenntnis der potentiellen Kraftübertragung werden anhand der Kennlinien die geeigneten Kopplungselemente bestimmt und ausgewählt. Umgekehrt kann bei gegebenen Eigenfrequenzen der Kopplungselemente natürlich auch diemögliche Kraftübertragung anhand der Kennlinien bestimmt werden.

Aufgrund der Einstellbarkeit und/oder Bestimmbarkeit der dynamischen Kraftübertragung bzw. der dynamischen Schwingung mit Bezug auf die zu tragende Last ist es möglich, Aktoren zur aktiven Schwingungsisolierung einzusetzen, die bisher aufgrund ihrer technischen Parameter für schwingungsisolierende Systeme nur schwer einsatzfähig gewesen sind. Demgemäß werden bevorzugt Standard-Piezo-Module bzw. Piezoaktoren zur aktiven Schwingungsisolation eingesetzt. Die bisher als nachteilig angesehenen Eigenschaften von Piezoaktoren: beschränkte Belastbarkeit gegenüber statischen Kräften und geringer Hub, können ausgeglichen werden. Eine Mehrzahl von Piezo-Modulen werden in der Vorrichtung aktiv schwingungsisolierend in allen Raumrichtungen wirksam angeordnet.

Die Lastaufnahme ist insbesondere der ersten Schwingungsisolationseinrichtung zur Aufnahme der Last zugeordnet. Die Lastaufnahme verteilt das Gewicht einer auf ihr liegenden Last gleichmäßig auf mehrere Stützen als Teil der Schwingungsisolationseinrichtungen. Die Lastaufnahme stellt ferner eine örtlich mechanische Kopplung zwischen der ersten Schwingungsisolationseinrichtung und der zweiten Schwingungsisolationseinrichtung her.

Ferner liegt as im Rahmen der Erfindung, als weiterbildung ein System bereitzustellen, welches neben aktorischen Fähigkeiten auch sensorische Eigenschaften besitzt, nämlich mit einer Schwingungssensorik ausgestattet ist. Diese tastet die anregende Bewegung auf die zu isolierende Last und zum anderen die Schwingungen ab, die durch an der Last angreifende Störkräfte verursacht werden. Zur aktiven Schwingungsisolierung werden die Schwingungsanregungen über eine Rückkopplungsregelung und/oder Vorwärtsregelung auf die zweite Schwingungsisolationseinrichtung zurückgekoppelt, um so die unerwünschten Schwingungen zu kompensieren bzw. zu dämpfen.

Das Regel-Steuersystem für den Aktor kann auch als ein sogenanntes adaptives System mit sensorischen und aktuatorischen Eigenschaften ausgestaltet sein. Eine gewisse Multifunktionalität darin, dass auf der Basis der Einsatzmöglichkeit verschiedenster Aktuatoren höchst flexibel und kostengünstig individuelle Lösungen zur aktiven Schwingungsisolierung beliebiger Lasten möglich sind.

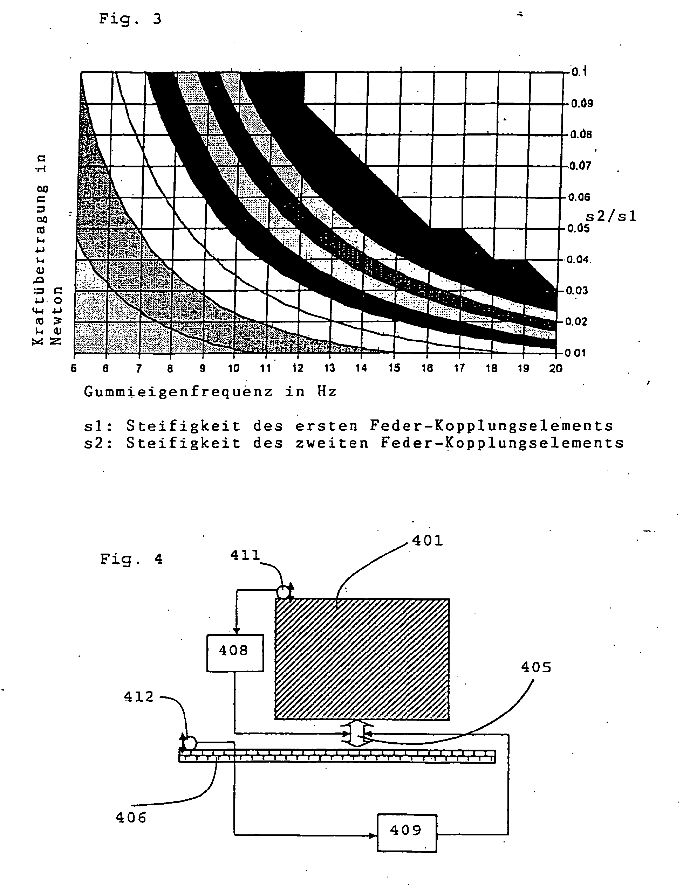

Die Wirkungsweise der Erfindung beruht darauf, dass die von einer Last ausgehenden oder auf diese wirkenden statischen und dynamischen Kräfte zumindest teilweise entkoppelt und im Anschluss die so entkoppelten dynamischen Kräfte separat gedämpft werden. Das Entkoppeln der Kräfte erfolgt im Rahmen des passiven Isolierens der Last. Die auftretenden Schwingungen werden auf wenigstens einen Aktor gekoppelt. Diese Ankopplung erfolgt in vorteilhafter Weise über eine Feder auf den Aktor. Besonders positiv ist in diesem Zusammenhang, dass erfindungsgemäß die Kraftübertragung des Aktors aus dem Kennlinienfeld nach Fig. 3 der Abhängigkeit der Schwingungseigenfrequenz der Passivisolierung vom Verhältnis aus der Eigenfrequenz der Feder mit Bezug auf den Aktor und der Eigenfrequenz der Passivisolierung bestimmt wird.

Die Erfindung wird nachfolgend anhand verschiedener Zeichnungen im Einzelnen beschrieben.

Es zeigen:
- Fig. 1: eine schematische Darstellung der erfindungsgemäßen Vorrichtung, bei der eine Vibrationsisolierung vorgesehen ist,
- Fig. 2: einen Querschnitt eines im Rahmen der Erfindung eingesetzten Piezoaktormoduls,
- Fig. 3: ein Diagramm mit Kraftübertragungskennlinien des Piezoaktors bei verschiedener Auslegung der Steifigkeit der Gummifedern,
- Fig. 4: eine schematische Darstellung des im Rahmen der Erfindung eingesetzten Regelsystems.

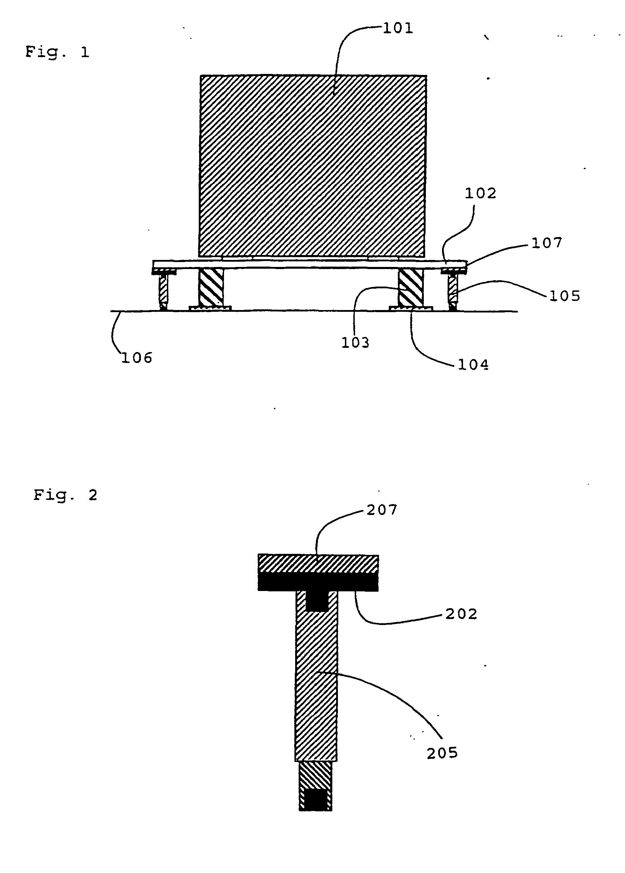

In Fig. 1 ist eine Last 101 dargestellt, die über eine Auflage 102 von Stützen 103 und 105 getragen wird. Die Stütze 103 ist durch eine Gummifeder 104 gegenüber einer Standfläche 106 passiv schwingungsisoliert. Bei der Stütze 105 handelt es sich um einen sogenannten Piezo-Aktor. Die statische Last 101, z.B. die eines Magnetresonanzgeräts, wird im wesentlichen vollständig von den Stützen 103 getragen. Zur Entkopplung der dynamischen Schwingungen von der statischen Last 101 steht die Stütze 103 auf einer Gummimatte 104 bzw. Gummifeder oder ähnlichem Kopplungselement. Neben der Stütze 103 befindet sich auch der Piezo-Aktor 105 mit der Unterseite der Auflage 102 in Anlage. Daher werden, auch wenn der Piezo-Aktor 105 im wesentlichen keine statische Last 101 trägt, unerwünschte Schwingungen, die auf die Stützen 103 bzw. auf die Auflage 102 wirken, auch auf den Piezo-Aktor 105 übertragen. Der Piezo-Aktor 105 steht ferner ebenfalls mit der Standfläche 106 in Verbindung. Insbesondere zur Vermeidung von Spannungen bzw. Verspannungen zwischen der Auflage 102 und dem Piezo-Aktor 105 ist zwischen Auflage 102 und Aktor 105 eine Gummifeder 107 als Kopplungselement gelagert. Besser ist die Gummifeder 107 aus Fig. 2 zu entnehmen, dort ist der im Rahmen dieses Ausführungsbeispiels verwendete Piezo-Aktor 105 im Detail dargestellt. Aufgrund der oben beschriebenen Entkopplung von statischen und dynamischen Kräften, wobei dem Aktor 105 über das entsprechende Kopplungselement 107 nur die dynamischen Kräfte zugeführt werden, ist es möglich, zur aktiven Schwingungsisolierung Standard-Aktoren mit einer vergleichsweise geringen Kraftübertragung und Hub zu verwenden. Unterstützt wird dies insbesondere auch dadurch, dass der Aktor 105 mit der Auflage 102 bzw. der Last 101 und der Stütze 103 nicht starr verbunden ist, sondern dynamisch, d.h. mit einer Gummifeder 107 als Kopplungselement. Die Stärke dieser Kopplung wird insbesondere durch die Steifheit des verwendeten Gummis 207 (Fig. 2) bzw. der verwendeten Feder und durch die Ankoppelfläche 202 des Aktors 205 an die Auflage 102 bestimmt.

Der Stützgummi 104 beeinflussen aufgrund seiner Dämpfungseigenschaft und Steifheit die Eigenfrequenz der Schwingungsisolationsvorrichtung und somit gleichfalls die auf den Piezo-Aktor 105 übertragene Schwingungsdynamik. Dies bedeutet aber im Ergebnis, dass durch geeignete Wahl der Gummifedern 104 und 107 die Kraftübertragung auf und von dem Piezo-Aktor 105 und die Schwingungsamplitude des Piezo-Aktor 105 gezielt manipulierbar ist. Als geeignete Parameter bieten sich für die Stützen 103, 105 hierbei insbesondere die Eigenfrequenzen der jeweiligen Gummifedern 104, 107 an, deren Frequenz unter anderem von der Auflagefläche, von dem Auflagegewicht und von der gewählten Gummisorte abhängen.

Dabei ist in der Praxis die Eigenfrequenz des Stützgummis 104 bereits häufig vorgegeben. Die Feder am Piezo-Aktor 107, 207 wird dann darauf angepasst, wie nachfolgend beschrieben. Das verwendete Gummi und dessen Steifigkeit bestimmen die Kraftübertragung auf und von dem Piezo-Aktor. Die gewählte Steifigkeit des Gummis hängt auch von der Eigensteifigkeit des Piezo-Aktors 105 ab. Der Piezo-Aktor 105 sollte in der Regel nicht gegen eine Steifigkeit arbeiten, die größer als ein Zehntel seiner Eigensteifigkeit ist.

Im Rahmen einer besonderen Ausführungsart der Erfindung hat sich zur Abstimmung des Stützgummis 104 auf den am Piezo-Aktor 105 angebrachten Gummi 107 als besonders geeigneter Parameter das Verhältnis aus der Eigenfrequenz des "Stützgummis" 104 und der des "Piezogummis" 107 herausgestellt. Wegen der Eigenfrequenz des "Piezogummis" 107 variiert man vor allem die Auflagefläche des Gummis 107 gegenüber dem Tisch 102 als Ankoppelfläche 202 (Fig. 2). Bei einer geeigneten Größe der Ankoppelfläche 202 können die unterschiedlichen Gummis 104, 107 auch die gleiche Gummisorte umfassen.

Aus dem Diagramm nach Fig. 3 sind verschiedene Kennlinien zu entnehmen, aus denen die notwendige Kraftübertragung des Piezo-Aktors 105 in Abhängigkeit von der Eigenfrequenz des Stützgummis 104 und dem Verhältnis der Steifigkeiten der Gummis 104, 107 bzw. dem Verhältnis zwischen deren Eigenfrequenzen entnommen werden kann. In dem Diagramm sind die Gummieigenfrequenzen in Hertz auf der Abszisse angegeben. An der Ordinate kann das Steifigkeitsverhältnis der Gummis abgelesen werden. Die einzelnen Kennlinien wurden jeweils zur Bestimmung einer definierten Kraftübertragung des Piezo-Aktors auf die Last bestimmt. Auch wurden in das Diagramm durch unterschiedliche Schattierung Kraftübertragungsbereiche eingezeichnet. Diese bewegen sich im Diagramm von der linken unteren Ecke in Richtung auf die rechte obere Ecke in 50-Newton-Schritten von 0 Newton bis 500 Newton. (Die Zeichnung lässt die unterschiedliche Schattierung der Bereiche für 450 N und 500 N nicht deutlich werden.) So kann z.B. anhand des Diagramms nach Fig. 3 abgelesen werden, dass bei einer technisch bedingten Kraftübertragung von 200 Newton die Eigenfrequenz des Gummis ca. 15Hz aufweisen kann und dass dann das Verhältnis der Gummieigenfrequenzen bei einem Wert von ca. 0,02 liegt. Natürlich muss zur Auswahl des geeigneten Aktors auch die durch die Kraftübertragung verursachte Schwingungsamplitude berücksichtigt werden. Jedoch gibt es vielfältige Abstimmungsmöglichkeiten bei der Verwendung verschiedenster Aktoren bzw. Piezo-Aktoren.

Neben der in Fig. 1 dargestellten reinen vertikalen Schwingungsisolation kann durch das Anbringen von z.B. drei weiteren, horizontal montierten Aktoren, die an der Masse oder Last angreifen, auch eine aktive Schwingungsisolation in der Horizontalen erzielt werden. Hierbei wird die eigentliche Schwingungsisolation dadurch realisiert, dass durch den Einsatz geeigneter Sensoren an der zu isolierenden Masse und an der Standfläche der Masse die unerwünschten Schwingungen und Stöße (harmonische oder stochastische) detektiert werden, um dann über einen Regler auf einen Aktor geführt zu werden.

Die hierbei einsetzbaren Regelungsvarianten sind in Fig. 4 schematisch dargestellt. Ziel der Schwingungsisolation ist es, die absolute Bewegung des Isolationskörpers 401 durch den Einsatz der Isolationsaktoren 105 (Fig. 1) zu minimieren. Dazu muss zum einen die Übertragung der anregenden Bewegung von der Standfläche 406 auf die Masse 401 verhindert werden und zum anderen müssen Schwingungen, die aus den an der Masse 401 angreifenden Störkräften resultieren, gedämpft werden. Erreicht wird dies durch den Einsatz zweier möglicher Konzepte. Es handelt sich dabei zum einen um die sogenannte Rückkopplungsregelung und um die Vorwärtsregelung. Bei der Rückkopplungsregelung handelt es sich um die klassische Variante der Schwingungskontrolle, bei der Sensorsignale von Sensoren 411 auf der sich bewegenden Masse 401 verwendet werden und durch einen oder mehrere Regler 408 aufbereitet werden und auf die Aktoren 405 zurückgekoppelt werden. Im Fall der Vorwärtsregelung werden Sensorsignale von Sensoren 412 auf der schwingenden Standfläche 406 bzw. am Aufstellort der Aktoren 405 und der Masse 401 verwendet und durch einen Regler 409 aufbereitet und auf die Aktoren 405 vorwärts gekoppelt. Die Schwingungsisolation des Körpers 401 kann in diesem Zusammenhang gegenüber der Anregung z.B. über eine Störgrößenkompensation erfolgen. Diese wird unter anderem durch ein Vorsteuern der Anregungsgeschwindigkeit und der Beschleunigung erzielt. Die entsprechenden Daten können beispielsweise aus Beschleunigungssensoren 411, 412 gewonnen werden. Wobei hierzu die detektierten Daten entsprechend zu filtern und zeitlich zu integrieren sind, um die Geschwindigkeit und die Auslenkung der Meßstelle bestimmen zu können.

Neben dem dargestellten Ausführungsbeispiel ist das erfindungsgemäße Konzept der Schwingungsisolierung bei den verschiedensten Anwendungen einsetzbar. Als Beispiel sei ferner eine sogenannte Stage-Isolierung erwähnt, bei der auf einem fahrbaren Tisch Lasten im Kilo oder 100-Kilo-Bereich zu isolieren sind.

## Patentansprüche

1. Vorrichtung zur Schwingungsisolation von Lasten umfassend:
eine Last oder abzustützende Masse (101),
eine Anzahl von Stützen (103), die zwischen einer Auflage (102) der Last (101) und einer Standfläche (106) angeordnet sind, und
eine Anzahl von Aktoren (105), die zwischen der Auflage (102) und der Standfläche (106) wirken,
wobei die Stützen (103) mit ersten Feder-Kopplungselementen (104) eine erste, passive Schwingungsisolationseinrichtung bilden, die von den Aktoren (105) getrennt ist, und
wobei die Aktoren (105) zusammen mit zweiten Feder-Kopplungselementen (107) eine zweite, aktive Schwingungsisolationseinrichtung bilden,
wobei ferner die erste Schwingungsisolationseinrichtung im Wesentlichen die vollständige statische Last trägt und die zweite Schwingungsisolationseinrichtung im Wesentlichen dynamische Kräfte aufnimmt, die zwischen Auflage (102) und Standfläche (106) wirksam werden,
**gekennzeichnet durch**
die Abstimmung der Eigenfrequenz der zweiten Feder-Kopplungselemente (107) zur Eigenfrequenz der ersten Feder-Kopplungselemente (104) aufgrund des Kennlinienfeldes nach Fig. 3 der Kraftübertragung der Aktoren (105), mit der Eigenfrequenz der ersten Feder-Kopplungselemente (104) als Abszisse und dem Verhältnis der Steifigkeiten des jeweils zweiten Feder-Kopplungselements zum jeweils ersten Feder-Kopplungselement als Ordinate.

2. Vorrichtung nach Anspruch 1,
**dadurch gekennzeichnet, dass** das erste und zweite Feder-Kopplungselement (104, 107) jeweils als Gummifedern ausgebildet sind.

3. Vorrichtung nach Anspruch 2,
**dadurch gekennzeichnet, dass** die Aktoren (105) als Module ausgebildet sind, und zwar jeweils mit einem Piezoelement (205) und einer Gummifeder (207) als zweites Feder-Kopplungselement (107) an einer Ankoppelfläche (202) des Piezoelements.

4. Vorrichtung nach Anspruch 3,
**dadurch gekennzeichnet, dass** die Größe der Ankoppelfläche (202) des Piezoelementes (205), die der Anlagefläche des zweiten Feder-Kopplungselements entspricht, so gewählt ist, dass gleiche Gummisorten für das erste und das zweite Feder-Kopplungselement gewählt werden können.

5. Vorrichtung nach Anspruch 3 oder 4,
**dadurch gekennzeichnet, dass** eine Mehrzahl von Piezo-Modulen (205) in der Vorrichtung vorgesehen und zur aktiven Schwingungsisolierung nach allen Raumrichtungen angeordnet sind.

6. Vorrichtung nach einem der Ansprüche 1 bis 5,
**dadurch gekennzeichnet, dass** Sensoren (411, 412) an der Last oder der abgestützten Masse (401) und der Standfläche (406) eingesetzt sind, um aus den Schwingungen der Last oder Masse (401) bzw. der Standfläche (406) Sensorsignale zu bilden, die einer Regel-Steuereinrichtung (408, 409) zugeführt werden, um die Aktoren (405) zu steuern.

## Claims

1. Device for vibration isolation of loads, comprising:
a load or mass to be supported (101),
a number of supports (103) which are arranged between a bearing surface (102) of the load (101) and a standing area (106), and
a number of actuators (105) which work between the bearing surface (102) and the standing area (106),
wherein the supports (103) form with first spring coupling elements (104) a first, passive vibration isolating device which is separated from the actuators (105), and
wherein the actuators (105) together with second spring coupling elements (107) form a second, active vibration isolating device,
wherein further the first vibration isolating device essentially carries the full static load and the second vibration isolating device essentially absorbs dynamic forces acting between the bearing surface (102) and standing area (106),
**characterised by**
the orientation of the characteristic frequency of the first spring coupling elements (104) to the characteristic frequency of the second spring coupling elements (107) on account of the characteristic curve field according to Fig. 3 of the force transmission of the actuators (105), with the characteristic frequency of the first spring coupling elements (104) as the abscissa and the ratio of the stiffness of the respective first spring coupling element to the respective second spring coupling element as the ordinate.

2. Device according to claim 1,
**characterised in that** the first and second spring coupling element (104, 107) are each formed as rubber springs.

3. Device according to claim 2,
**characterised in that** the actuators (105) are formed as modules and indeed each with a piezoelectric element (205) and a rubber spring (207) as a second spring coupling element (107) on a coupling area (202) of the piezoelectric element.

4. Device according to claim 3,
**characterised in that** the size of the coupling area (202) of the piezoelectric element (205) which corresponds to the abutment area of the second spring coupling element is selected so that the same types of rubber can be selected for the first and the second spring coupling element.

5. Device according to claim 3 or 4,
**characterised in that** a plurality of piezoelectric modules (205) are provided in the device and arranged for active vibration isolation in all spatial directions.

6. Device according to one of the claims 1 to 5,
**characterised in that** sensors (411, 412) are used on the load or supported mass (401) and the standing area (406) in order to form sensor signals from the vibrations of the load or mass (401) or the standing area (406) wherein the sensor signals are fed to a closed loop / open loop control device (408, 409) in order to control the actuators (405).

## Revendications

1. Dispositif d'isolation de vibrations de charges, comportant :
une charge ou masse à supporter (101),
un certain nombre de supports (103), qui sont agencés entre un appui (102) de la charge (101) et une surface d'assise (106), et
un certain nombre d'actionneurs (105), qui agissent entre l'appui (102) et la surface d'assise (106),
les supports (103) formant avec des premiers éléments d'accouplement à ressort (104) un premier dispositif d'isolation passive de vibrations, qui est séparé des actionneurs (105), et
les actionneurs (105) formant conjointement avec des deuxièmes éléments d'accouplement à ressort (107) un deuxième dispositif d'isolation active de vibrations,
le premier dispositif d'isolation de vibrations portant en outre sensiblement la charge statique complète, et le deuxième dispositif d'isolation de vibrations absorbant pour l'essentiel des forces dynamiques qui agissent entre l'appui (102) et la surface d'assise (106),
**caractérisé par**
l'adaptation de la fréquence de résonance des deuxièmes éléments d'accouplement à ressort (107) par rapport à la fréquence de résonance des premiers éléments d'accouplement à ressort (104) sur la base du champ de courbes caractéristiques selon la figure 3 de la transmission de force des actionneurs (105), avec la fréquence de résonance des premiers éléments d'accouplement à ressort (104) en tant qu'abscisse, et le rapport des rigidités du deuxième élément d'accouplement respectif par rapport au premier élément à ressort respectif en tant qu'ordonnée.

2. Dispositif selon la revendication 1,
**caractérisé en ce que** le premier et le deuxième élément d'accouplement à ressort (104, 107) sont respectivement réalisés sous la forme de ressorts en caoutchouc.

3. Dispositif selon la revendication 2,
**caractérisé en ce que** les actionneurs (105) sont réalisés sous la forme de modules, et ce, respectivement, avec un élément piézoélectrique (205) et un ressort en caoutchouc (207) en tant que deuxième élément d'accouplement à ressort (107) sur une surface d'accouplement (202) de l'élément piézoélectrique.

4. Dispositif selon la revendication 3,
**caractérisé en ce que** la dimension de la surface d'accouplement (202) de l'élément piézoélectrique (205), qui correspond à la surface d'appui du deuxième élément d'accouplement à ressort, est choisie de telle sorte que les mêmes sortes de caoutchouc peuvent être choisies pour le premier et pour le deuxième élément d'accouplement à ressort.

5. Dispositif selon la revendication 3 ou 4,
**caractérisé en ce que** plusieurs modules piézoélectriques (205) sont prévus dans le dispositif et disposés dans toutes les directions spatiales pour l'isolation active de vibrations.

6. Dispositif selon l'une des revendications 1 à 5,
**caractérisé en ce que** des capteurs (411, 412) sont installés sur la charge ou la masse supportée (401) et sur la surface d'assise (406), afin de générer des signaux de détection à partir des vibrations de la charge ou masse (401) ou de la surface d'assise (406), qui sont transmis à un dispositif de commande et de régulation (408, 409) pour commander les actionneurs (405).
